# EUROPEAN PATENT SPECIFICATION

(11) **EP 4 003 631 B1**
(45) Date of publication and mention of the grant of the patent: **17.01.2024**
(21) Application number: 20753643.4
(22) Date of filing: 23.07.2020
(51) Int. Cl.: B23K 9/095, B23K 9/10, B23K 9/32, G06F 3/0484

(54) **USER INTERFACE FOR WELDING POWER SUPPLY, AND WELDING POWER SUPPLY WITH SUCH USER INTERFACE**
BENUTZERSCHNITTSTELLE FÜR SCHWEISSSTROMVERSORGUNG UND SCHWEISSSTROMVERSORGUNG MIT EINER SOLCHEN BENUTZERSCHNITTSTELLE
INTERFACE UTILISATEUR POUR ALIMENTATION ÉLECTRIQUE DE SOUDAGE, ET ALIMENTATION ÉLECTRIQUE DE SOUDAGE AYANT UNE TELLE INTERFACE UTILISATEUR

(30) Priority: 30.07.2019 US 201962880391 P; 22.07.2020 US 202016935528
(43) Date of publication of application: 01.06.2022
(73) Proprietor: Illinois Tool Works, Inc., Glenview, Illinois 60025 (US)
(72) Inventor: DUNAHOO, Jason, Glenview, Illinois 60025 (US); ROSERA, Caleb, Glenview, Illinois 60025 (US)
(74) Representative: HGF
(86) International application number: PCT/US2020/043205
(87) International publication number: WO 2021/021544

(56) References cited:
- WO-A2-2015/145391
- US-A1- 2017 165 775
- US-A1- 2017 282 276
- US-A1- 2018 095 640

## Description

### BACKGROUND

This disclosure relates generally to welding systems and, more particularly, to a combination of a graphical user interface and a controller, and to a welding-type system comprising such combination.

Myriad interface types have been used for conventional power supplies. Conventional user interface for power supplies either rely on the operator to manually select the appropriate parameters, such as voltage and wire feed speed, or rely on the operator specifying the material thickness and then calculating appropriate parameters from the material thickness.

Earlier patent document US 2017/165775 A1 (disclosing all the features of the preamble of claims 1 and 11) describes a welding system that includes an interface with a first input element configured to receive an input relating to a parameter of power delivered to a welding torch from a welding power supply, a second input element configured to receive an input relating to a rate of advancement of an electrode delivered to the welding torch from a welding wire feeder, a third input element configured to receive an input relating to whether the parameter of power and the rate of advancement of the electrode are automatically set, and a color display device configured to display the parameter of power and the rate of advancement of the electrode. The welding system also includes control circuitry configured to adjust and display on the color display device the parameter of power and the rate of advancement based at least in part on a selected diameter setting for the electrode and a selected material thickness setting for a work piece when the third input element is activated, and to control the parameter of power and the rate of advancement based on the adjustment of the parameter of power and the rate of advancement.

### SUMMARY

A combination of a graphical user interface and a controller according to the present invention is defined in claim 1.

A welding-type system with such combination is defined in claim 11.

Further embodiments of the present invention are defined in the dependent claims 2-10 and 12-15.

Welding power supplies and user interfaces for welding power supplies are disclosed, substantially as illustrated by and described in connection with at least one of the figures. The invention is defined in the claims.

### BRIEF DESCRIPTION OF THE DRAWINGS

FIG. 1A is a schematic diagram of an example welding system including a power supply having a user interface to configure a welding process, in accordance with aspects of this disclosure.
FIG. 1B is a schematic diagram of another example welding system including a wire feeder having a user interface to configure a welding process, in accordance with aspects of this disclosure.
FIG. 1C is a schematic diagram of another example welding system including a user interface connected to a welding power supply and/or a wire feeder to configure a welding process, in accordance with aspects of this disclosure.
FIG. 2 illustrates an example graphical user interface that may be used to implement the user interface of FIGS. 1A-1B.
FIGS. 3A and 3B illustrate example implementation of the graphical user interface of FIG. 2 during a welding process.
FIG. 4 illustrates an example graphical user interface that may be used to implement the user interface of FIGS. 1A-1B.
FIG. 5 illustrates an example graphical user interface that may be used to implement the user interface of FIGS. 1A-1B.
FIGS. 6A-6B provide a flowchart representative of example machine readable instructions which may be executed by the example system of FIGS. 1A-1B to implement the graphical user interface of FIGS. 2-5.

The figures are not necessarily to scale. Where appropriate, similar or identical reference numbers are used to refer to similar or identical components.

### DETAILED DESCRIPTION

Disclosed example power supplies, user interfaces, and methods allow for simple and intuitive user setup of a welding power source and/or wire feeder.

Example welding power supplies and user interfaces for welding power supplies are disclosed. An example welding-type system includes a wire feeder and a welding-type power supply having a graphical user interface (GUI) that includes a first graphical interface representing a first welding parameter, and a second graphical interface representing a second welding parameter. A controller receives data corresponding to output values for each of the first and second welding parameters, respectively. The controller receives an output value associated with the second welding parameter and calculates a range of values for each of the first and second welding parameter based on the received second welding parameter output value and one or more corresponding welding process parameters. First and second graphical bands representing the range of values for a respective welding parameter are generated and displayed.

When adjusting the wire feed speed, the display may provide a recommended material thickness or range of thicknesses based on the wire feed speed. As the wire feed speed is adjusted, the voltage value and/or range is automatically adjusted as well based on stored voltage-wire feed speed relationships and selected parameters (such as workpiece thickness). However, the operator can also manually adjust the voltage to achieve the desired welding performance independent of the wire feed speed, for example. Indicators, such as LEDs having shapes such as small arrows and a star, next to the voltage display indicate whether the setting is at the default or preferred range or voltage (e.g., a star), higher than the preferred voltage or range (up arrow), or lower than the preferred voltage or range (down arrow).

The initial selection process of the weld process, electrode wire type, electrode wire size, and shielding gas composition can assist the user to select a preferred (e.g., optimal) set of weld parameters. The selection of the weld process, electrode wire type, electrode wire size, and shielding gas composition is achieved by repeatedly pressing a corresponding button to cycle through a sequence of permissible values for the corresponding parameter.

According to the present invention, the graphical user interface includes a first graphical interface representing a first welding parameter and a second graphical interface representing a second welding parameter, each graphical interface being controlled by a controller. The controller is configured to receive data corresponding to output values for each of the first and second welding parameters, respectively. The controller displays a first marker on the first graphical interface representing the output value associated with the first welding parameter, displays a second marker on the second graphical interface representing the output value associated with the second welding parameter. The controller may determine a range of values for each of the first and second welding parameter based on the output value associated with the second welding parameter and one or more corresponding welding process parameters, generate a first graphical band representing the range of values for the first welding parameter, and generate a second graphical band representing the range of values for the second welding parameter. The controller further displays the first and second graphical bands on the first and second graphical interfaces, respectively.

Further according to the present invention, the controller is configured to adjust a position of the first graphical band on the first graphical interface based on a change in the output value associated with the second welding parameter.

In examples, the generated range of values for the second welding parameter are a first range of values, the controller further configured to determine a change in the output value associated with the second welding parameter from a first value corresponding to a first workpiece property value to a second value corresponding to a second workpiece property value.

In some examples, the first workpiece property value corresponds to the first range of values and the second workpiece property value corresponds to a second range of values, the controller further configured to generate a third graphical band corresponding to the second range of values; and display the third graphical band on the second graphical interface.

In examples, the second graphical band representing the first range of values overlaps with the third graphical band representing the second range of values.

In some examples, the controller is further configured to access a list of workpiece properties, each property corresponding to a range of values for the first or the second welding parameter.

In examples, the controller is further configured to receive an input corresponding to a change in value of the first welding parameter; display the first marker at the changed value on the first graphical interface independently of the first graphical band.

In some examples, the controller is further configured to display a first characteristic on a first portion of each graphical band associated with a low welding parameter value; and display a second characteristic on a second portion of the graphical representation associated with a high welding parameter value.

In examples, the first or second characteristic comprises one of a color, an intensity, a shape, a size, or a pattern. In some examples, the first characteristic is a first color and the second characteristic is a second color, the controller configured to control the respective graphical interface to display a color gradient from the first color to the second color.

In some examples, portions of each graphical interface displays a graphical operating range corresponding to the operating range of the respective welding parameter, wherein portions of the graphical operating range outside the respective graphical band is displayed with a third characteristic.

In examples, the controller is further configured to dynamically calculate the range of values based on a change in the property of the workpiece. In some examples, the property of the workpiece comprises one or more of material thickness or material type.

In disclosed examples, a welding-type system includes a wire feeder and a welding-type power supply. The welding-type power supply includes the combination of the graphical user interface and the controller as listed above.

In some examples, each graphical interface further comprises a numerical value of the respective welding parameter. In examples, the first welding parameter is voltage, and the second welding parameter is wire feed speed. In some examples, one or more visual indicators associated with the first or second graphical band is changed in response to a change in the first or the second welding parameter.

In examples, the one or more visual indicators is one of a color, a brightness, a shape, a size, or a pattern. In some examples, the controller is further configured to display a position of a value marker associated with the first or second welding parameter on the respective graphical interface independently of the respective graphical band.

In examples, limits of the operating ranges the first and second graphical interfaces correspond to operating parameters of the welding-type system, the controller further configured to display the first and second visual bands within the respective operating range based on the calculated range of values.

As used herein, the term "welding program" includes at least a set of welding parameters for controlling a weld. A welding program may further include other software, algorithms, processes, or other logic to control one or more welding-type devices to perform a weld.

It is noted that a inch corresponds to 25.4 mm.

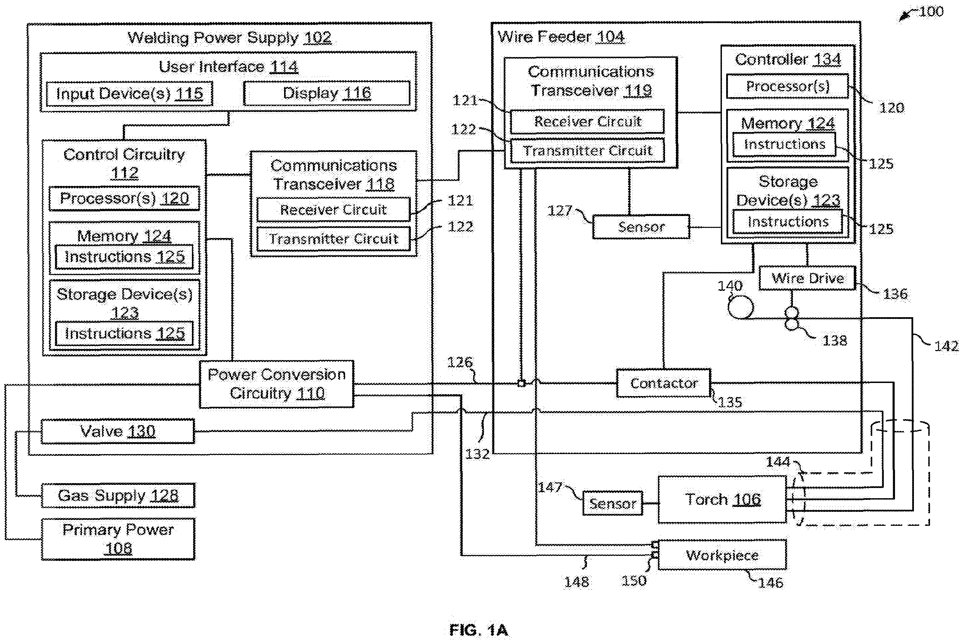

Turning now to the drawings, FIG. 1A is a block diagram of an example welding system 100 having a welding-type power supply 102, a wire feeder 104, and a welding torch 106. The welding system 100 powers, controls, and supplies consumables to a welding application. In some examples, the power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 1A includes a wire feeder 104 (e.g., for GMAW or FCAW welding), the wire feeder 104 may be replaced by any other type of remote accessory device, such as a stick welding and/or TIG welding remote control interface that provides stick and/or TIG welding

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter 111 is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes a control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using one or more input devices 115, such as via a keypad, keyboard, physical buttons, a touch screen (e.g., software buttons), a voice activation system, a wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with other welding devices within the welding system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1A, the control circuitry 112 communicates with the wire feeder 104 via the weld circuit via a communications transceiver 118, as described below.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation. One or more lists or look up tables may be provided, and/or network connections to various databases available to inform decision-making.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 is communicatively coupled to the weld cable 126 to communicate (e.g., send/receive) data over the weld cable 126. The communications transceiver 118 may be implemented using serial communications (e.g., full-duplex RS-232 or RS-422, or half-duplex RS-485), network communications (e.g., Ethernet, PROFIBUS, IEEE 802.1X wireless communications, etc.), parallel communications, and/or any other type of communications techniques. In some examples, the communications transceiver 118 may implement communications over the weld cable 126.

The example communications transceiver 118 includes a receiver circuit 121 and a transmitter circuit 122. Generally, the receiver circuit 121 receives data transmitted by the wire feeder 104 via the weld cable 126 and the transmitter circuit 122 transmits data to the wire feeder 104 via the weld cable 126. The communications transceiver 118 enables remote configuration of the power supply 102 from the location of the wire feeder 104, and/or command and/or control of the wire feed speed output by the wire feeder 104 and/or the weld power (e.g., voltage, current) output by the power supply 102.

The example wire feeder 104 also includes a communications transceiver 119, which may be similar or identical in construction and/or function as the communications transceiver 118. While communication over a separate communications cable is illustrated in FIG. 1A, other communication media, such as wireless media, power line communications, and/or any other communications media, may be used.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104, which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder controller 134. As noted above, the weld cable 126 may be configured to provide or supply the welding power. The power supply 102 may also communicate with a communications transceiver 119 of the wire feeder 104 using the weld cable 126 and the communications transceiver 118 disposed within the power supply 102. In some examples, the communications transceiver 119 is substantially similar to the communications transceiver 118 of the power supply 102. The wire feeder controller 134 controls the operations of the wire feeder 104. In some examples, the wire feeder 104 uses the wire feeder controller 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder controller 134 and configured to enable or inhibit welding power to continue to flow to the weld cable 126 for the welding application. In some examples, the contactor 135 is an electromechanical device. However, the contactor 135 may be any other suitable device, such as a solid-state device. The wire feeder 104 includes a wire drive 136 that receives control signals from the wire feeder controller 134 to drive rollers 138 that rotate to pull wire off a spool 140 of wire. The wire is provided to the welding application through a torch cable 142. Likewise, the wire feeder 104 may provide the shielding gas from the cable 132 through the cable 142. The electrode wire, the shield gas, and the power from the weld cable 126 are bundled together in a single torch cable 144 and/or individually provided to the welding torch 106. In some examples, the contactor 135 is omitted and power is initiated and stopped by the power supply 102. In some examples, one or more sensors 127 are included with or connected to in the wire feeder 102 to monitor one or more welding parameters (e.g., power, voltage, current, wire feed speed, etc.) to inform the controller 134 during the welding process. In some examples, one or more sensors are included in the welding power supply 102.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 attachable and/or detachable from the power supply 102 for ease of replacement of the work cable 148. The work cable 148 may be terminated with a clamp 150 (or another power connecting device), which couples the power supply 102 to the workpiece 146. In some examples, one or more sensors 147 are included with or connected to the welding torch 106 to monitor one or more welding parameters (e.g., power, voltage, current, wire feed speed, etc.) to inform the controller 134 and/or 112 during the welding process.

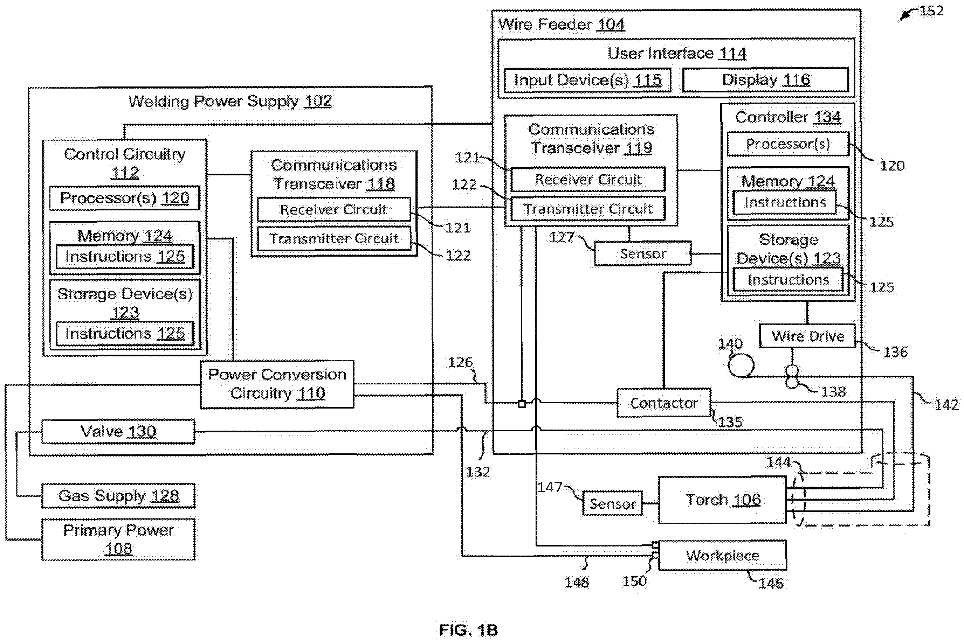

FIG. 1B is a schematic diagram of another example welding system 152 in which the wire feeder 104 includes the user interface 114 in addition or as an alternative to the user interface on the welding power supply 102. In the example of FIG. 1B, the control circuitry 134 of the wire feeder 104 implements the determinations of the welding program and welding parameters which are described with reference to the control circuitry 112 of FIG. 1A.

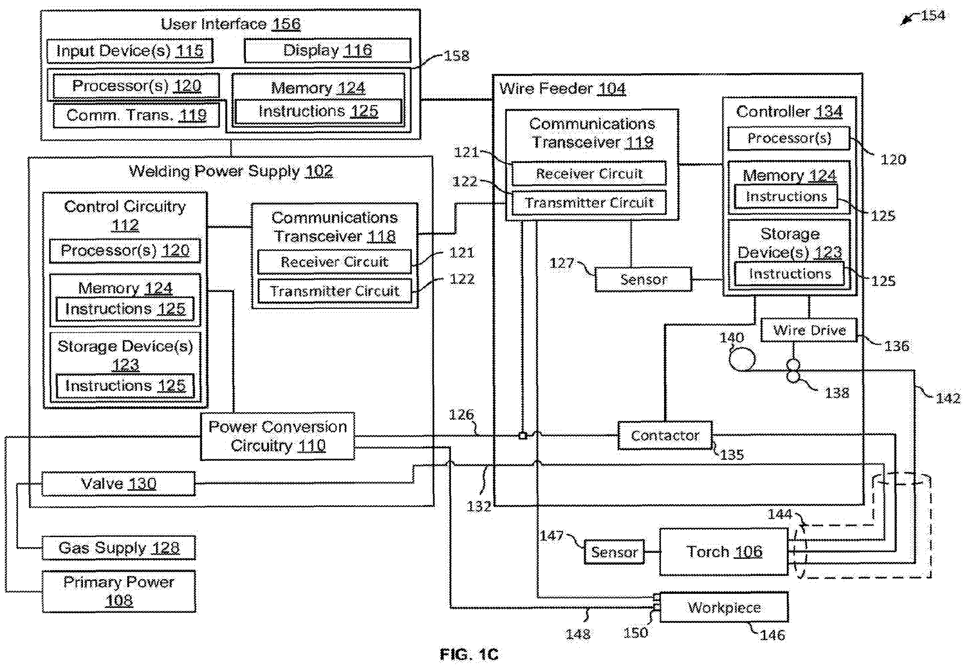

FIG. 1C is a schematic diagram of another example welding system 154 including a separate user interface 156. The user interface 156 is a separate device, and may be connected to the welding power supply 102 and/or to the wire feeder 104 to provide commands and/or control information. The example user interface 156 includes the input devices 115 and the display 116, and includes control circuitry 158. The example control circuitry 158 includes the processor(s) 120 and the memory 124 storing the instructions 125. The example user interface 156 further includes a communications transceiver 119 to enable communications between the user interface 156 and the welding power supply 102 and/or the wire feeder. Although FIGS. 1A-1C are illustrated as having a user interface (114, 156) incorporated with a particular system, the illustration is exemplary such that one or more of the interfaces disclosed herein as well as additional user interfaces may be incorporated in one or more of the example welding systems disclosed herein.

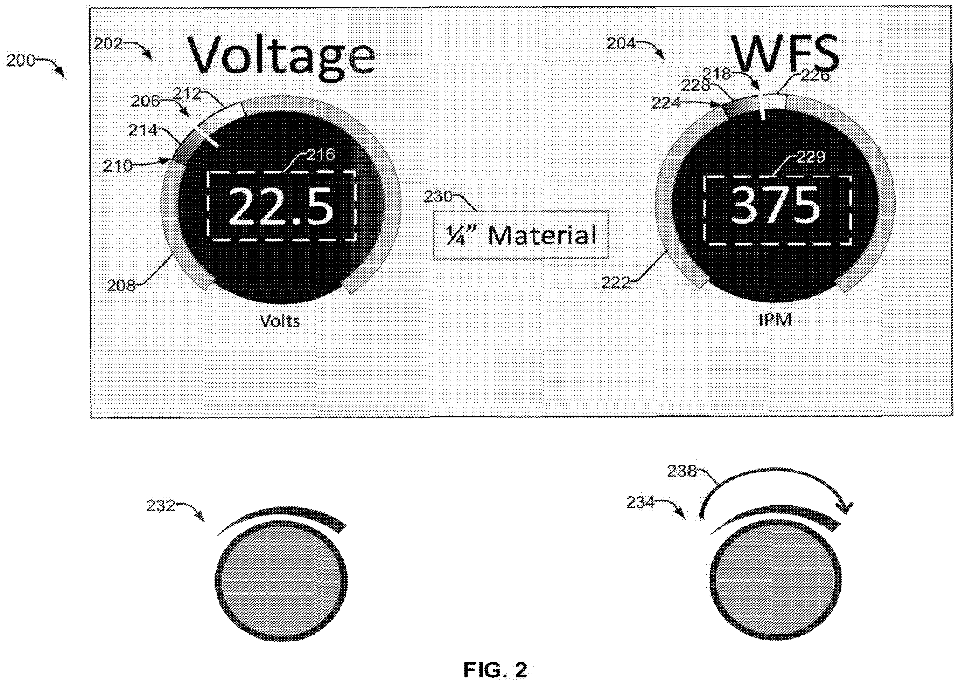

FIG. 2 illustrates an example graphical user interface 200 that may be used to implement the graphical user interface(s) 114, 156 of FIGS. 1A-1C. The graphical user interface 200 of FIG. 2 includes one or more graphical interfaces 202 and 204, one or more welding property displays 230, and/or one or more selectors 232 and 234 to allow a user to configure one or more welding parameters for a selected weld process. The graphical user interface 200 may include more or fewer of the example graphical interfaces 202, 204 illustrated in FIG. 2.

The example welding system(s) may implement a synergic mode, in which the control circuitry 112, controller 134, and/or controller 158, determines a voltage value in response to a wire feed speed selection via selector 234 and a predetermined relationship between the wire feed speed and the voltage. In some examples, the predetermined relationship is selected based on the weld program or one or more welding parameters, including workpiece type, thickness, etc. The control circuitry/controller may enable or disable the synergic mode based on the selected weld program (e.g., based on a selection of synergic weld process or a non-synergic weld process).

When the control circuitry/controller implements the synergic mode, the control circuitry/controller may determine a workpiece or material thickness that is recommended for the currently-selected wire feed speed and/or weld program. For example, a range of wire feed speeds may be stored as a list of values associated with one or more welding parameters (e.g., voltage, current, workpiece properties) in the storage device(s) 123 and/or the memory 124 as suitable for a particular weld program and wire feed speed.

The example user interface 200 of FIG. 2 for synergically adjusting voltage and wire feed speed illustrates a wire feed speed of 375 inches per minute (IPM) selected (e.g., via the selector 234, via the control circuitry/controller, etc.) and is displayed on the graphical interface 204. Based on the selected wire feed speed, the control circuitry/controller determines the corresponding voltage associated with the weld program and/or one or more of the welding process parameter, workpiece property, the wire type parameter, the wire size parameter, or the gas type parameter based on a relationship between at least the wire feed speed and the voltage, all of which may be stored (e.g., in the storage device(s) 123, in the memory 124, etc.) in a list of values or look up table for instance. The control circuitry/circuit sets the voltage value determined based on the relationship.

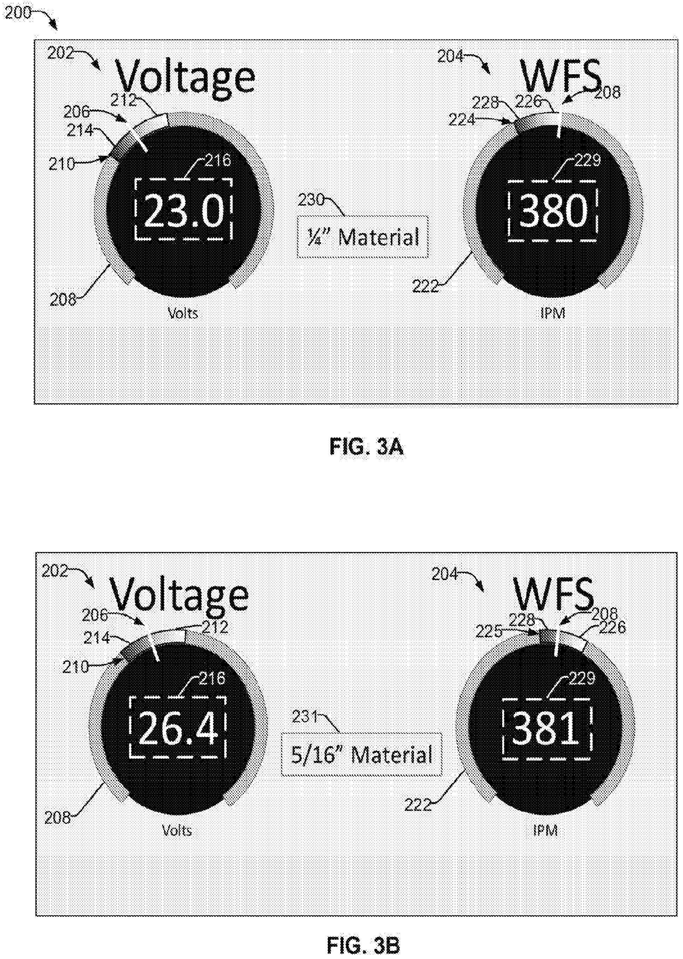

In addition to setting the voltage, the example control circuity/controller determines a recommended material thickness corresponding to the selected wire feed speed (or vice versa), and displays the material thickness on the display 230. In addition to the wire feed speed, the control circuitry/controller may determine the material thickness based on the weld process parameter, the wire type parameter, the wire size parameter, and/or the gas type parameter. As illustrated in FIG. 2, a wire feed speed of 375 IPM results in a voltage value of 22.5 volts and a material thickness of 1/4". As illustrated in FIG. 3A and 3B, changing the wire feed speed results in a change in the voltage value, and may cause a change in recommended material thickness.

The graphical user interface 200 includes a first graphical interface 202 representing a first welding parameter, such as voltage. A second graphical interface 204 represents a second welding parameter, such as wire feed speed. Each graphical interface 202 and 204 may be controlled by a controller, such as control circuitry 112, controller 134, and/or controller 158, responsive to selectors 232 and 234, for example.

Each graphical interface 202 and 204 includes a marker 206, 218 representing the output value associated with the respective welding parameter (e.g., voltage or wire feed speed). During a welding process, each graphical interface 202 and 204 may display a numerical value 216, 229 corresponding to the welding system output of the particular welding parameter, such as measured from one or more sensors. In some examples, the numerical values 216, 229 represent an estimated or calculated value.

Each graphical interface 202 and 204 includes a graphical operating range 208, 222 representing the full operating range of output values for the particular welding parameter (e.g., based on the particular welding power source). Within each operating range is a graphical band 210, 224 providing a visual representation of the value ranges for each of the first and second welding parameter based on one or more of a welding parameter output value (e.g., the wire feed speed) and/or associated with the weld program and/or one or more of the welding process parameter, workpiece property, the wire type parameter, the wire size parameter, or the gas type parameter. For example, the welding property display 230 may provide a numerical value (e.g., a material gauge or thickness) or other information (e.g., material type) corresponding to a selected and/or calculated property of the workpiece. In some examples, the display 230 may provide additional or alternative information regarding one or more welding process parameters.

The graphical bands 210, 224 represent a recommended range of operating values associated with a particular material property and/or welding process parameter. In the example of graphical interface 202, graphical band 210 represents a range of values spanning a low voltage value (identified by a darker grey in portion 214) to a high voltage value (identified by a lighter grey in portion 212) corresponding to a recommended range of voltage values associated with a 1/4 inch workpiece. In the example of FIG. 2, marker 206 (representing approximately 22.5 volts as shown in central block 216) is approximately centered on the graphical band 210 between lower portion 214 and higher portion 212. Marker 218, corresponding to the wire feed speed value shown in central block 229, is positioned within graphical band 224 slightly right of center, thus at a portion 226 of the graphical band 224 associated with a higher wire feed speed, versus portion 228 representing a lower wire feed speed.

As shown, portions 214, 228 represent a lower value for the respective welding parameters. In FIG. 2, this is illustrated as a dark grey, whereas portions 212, 226, representing higher values for the respective welding parameters, are illustrated as a lighter grey. The gradient between dark and light provides an observer with an immediate indicator that a particular welding parameter is at the low or high end of the range of values. Although illustrated as shades of grey, in disclosed examples, the gradient can be displayed as different colors, patterns, shapes, intensities, to name but a few. Additionally or alternatively, values may be displayed to provide a numerical indicator as to the limits of the operative range. Further, within each graphical band, the range of values may be represented by colors, for instance, with lower or cooler values corresponding to blue and higher or hotter values corresponding to red.

In some examples, the particular values, ranges, and/or adjustments displayed in the graphical user interface 200 are calculated by the controller and/or control circuitry. For example, the controller is configured to receive data corresponding to output values for each of the first and second welding parameters, such as via a user input and/or measured data from one or more sensors. The controller further calculates the ranges of values for each of the welding parameter based on one or more inputs, including welding parameter output values, one or more of the welding process parameters, and/or a property of the workpiece property.

The controller may be configured to access a list of workpiece properties, each property corresponding to a range of values for a selected welding parameter, such that when a workpiece property is known, the range of values corresponding to the graphical bands is identified from the list. Additionally or alternatively, the controller may access a list of workpiece properties associated with one or more welding parameters, such as wire feed speed, and/or welding process parameters. Thus, if a user input selects a particular wire feed speed, the controller identifies a corresponding workpiece property (such as gauge or thickness). This information can then be used to determine the range of values for one or more of the welding parameters.

Although not illustrated in FIG. 2, other visual indicators may be provided in the graphical interface 200. For example, historical information may be provided as to what types of material and/or welding parameter ranges have been used may be displayed. A visual characteristic (such as color) may be displayed with the graphical interfaces, such as reflecting the characteristic associated with the respective marker's position within a graphical band.

Further, the controller may calculate trending information during the welding process, such that the controller can anticipate a shift to a different material thickness, for instance. For example, the display 230 may indicate whether a particular welding parameter (wire feed speed) is approaching a threshold to a larger or smaller gauge material. The indicators can include arrows, text, colors, a change in character of the displayed material property, to name a few.

FIGS. 3A and 3B illustrate an implementation of the graphical user interface 200 in response to a change in one or more of the welding parameters. For instance, selector 234 may be turned in a direction 238 to increase the wire feed speed, as indicated in FIG. 2. In the example of FIG. 3A, the wire feed speed increases from 375 to 380 inches per minute (IPM). As shown, the marker 208 is now at an edge of the portion 226 of band 224, indicating the wire feed speed is at the upper threshold of the range of values associated with 1/4 inch material thickness.

As shown in FIG. 3B, the wire feed speed increases to 381, which causes the controller to determine the wire feed speed has entered into a new range of values corresponding to a new graphical band 225. Display 231 has transitioned to reflect a 5/16 inch material thickness, and the voltage output value has increased from 22.5 to 23, and ultimately to 26.4 to correspond to a voltage level determined by the controller to be suitable for a welding process on a 5/16 inch workpiece.

As shown in FIG. 3B, although graphical band 224 (corresponding to 1/4 inch material) has transitioned to graphical band 225 (corresponding to 5/16 inch material), a degree of overlap exists between the two bands. However, in some examples, a given range of values (and the associated band) will be defined by a high threshold value corresponding to a low threshold value of another range of values (associated with another band).

The graphical user interface 200 enables an operator to easily and intuitively set up (or configure) a type of weld process. The example graphical user interface 200 may include a weld voltage parameter selector 232 and/or a wire feed speed selector 234. The example selectors are shown in FIG. 2 and described as hardware knobs, but may be implemented using other types of input devices, such as software buttons executed on a touch screen or other display, switches, and/or any other type of input device. The operator may, after the voltage is set by the controller in response to a selected wire feed speed in synergic mode, adjust the voltage via the voltage adjustment knob 232.

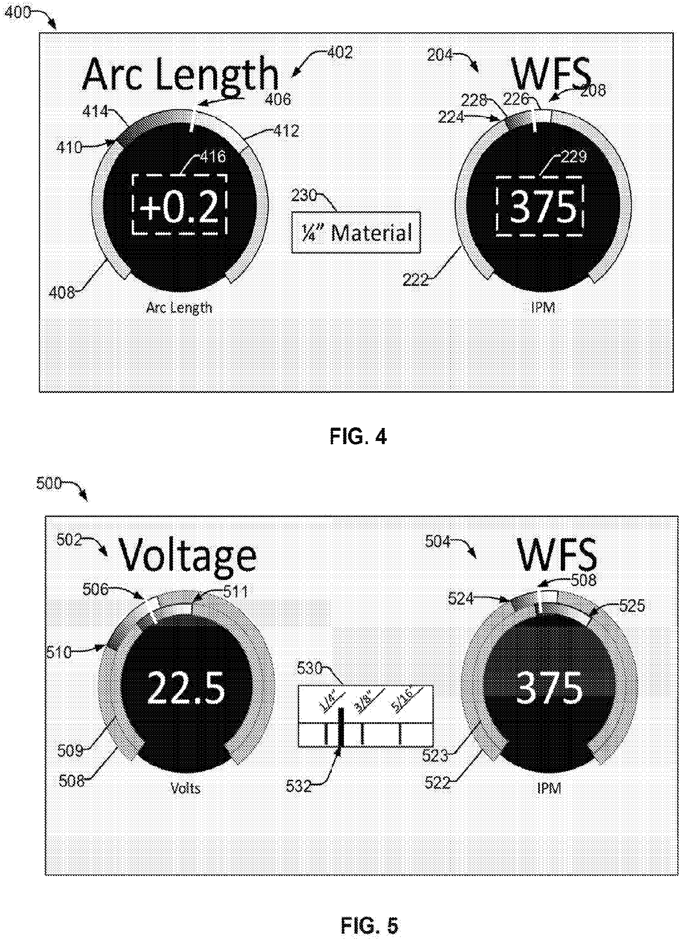

FIG. 4 illustrates an example graphical user interface 400, which associates arc length with wire feed speed. As shown, a graphical interface 402 incorporates features similar to those of graphical interface 204. In particular, a range of values are represented as 408, with a graphical band 410 illustrating a range of values associated with the material property displayed at 230 and/or the wire feed speed as shown in graphical interface 204. Accordingly, a value associated with arch length is centrally displayed at 416 within graphical interface 402 as marker 406 indicates where the arc length value 416 corresponds to the range of values shown in graphical band 410. Thus, portion 414 (in dark grey) indicates a shorter arc length, whereas portion 412 (in light grey) indicates a longer arc length.

The arc length graphical interface 402 can be controlled by a selector, similar to selector 232. The arc length selection enables the operator to adjust the feel of the arc within a range between "shorter" and more "long." The example arc length may be implemented using an encoder to determine the position of the arc length selector, which enables rapid recall and setting of prior values of one or more welding parameters that are associated with the arc length parameter.

FIG. 5 illustrates an example graphical user interface 500, which includes two bands on each graphical interface 502, 504. For example, graphical interface 502 corresponds to voltage similar to graphical interface 202 shown in FIG. 2. Graphical interface 502 includes two operational ranges 508, 509, each with a band 510, 511 corresponding to a different material property (e.g., thickness) and/or welding parameter (e.g., wire feed speed). As disclosed herein, ranges of values represented in each band 510, 511 may overlap; however, in some examples, a threshold value indicates the end of a given range of values and the beginning of another range of values.

Graphical interface 504 illustrates a similar concept, such that operational ranges 522, 523 show different range of values represented in bands 524, 525. As shown, graphical bands 510, 524 may correspond to a first material property (e.g., a 1/4 inch workpiece), whereas graphical bands 511, 525 may correspond to a second material property (e.g., a 3/8 inch workpiece).

In some examples, as wire feed speed increases, the associated values and position of the marker 508 increases accordingly. As the wire feed speed meets the threshold for the current material thickness, the change in material thickness setting may be displayed, such as within display 530 and/or indicated by a marker 532. Moreover, as the range of values are recalculated, the selected band may reflect the change, such as providing visual emphasis (e.g., intensity, color change, shape, pattern, etc.).

As is further shown in FIG. 5, display 530 illustrates an example technique to indicate a range of material properties in a different format. For example, text corresponding to various workpiece thicknesses may be provided along a dial, where the ranges may change and/or the indicator 532 may change in response to a selected change in wire feed speed.

In some examples, an additional or alternative indicator ring may be displayed outside the graphical interfaces (e.g., 202, 204, 402, 502, 504). The indicator ring may represent material thickness as a static or dynamic image, which corresponds to movement of the respective welding parameter value and/or marker.

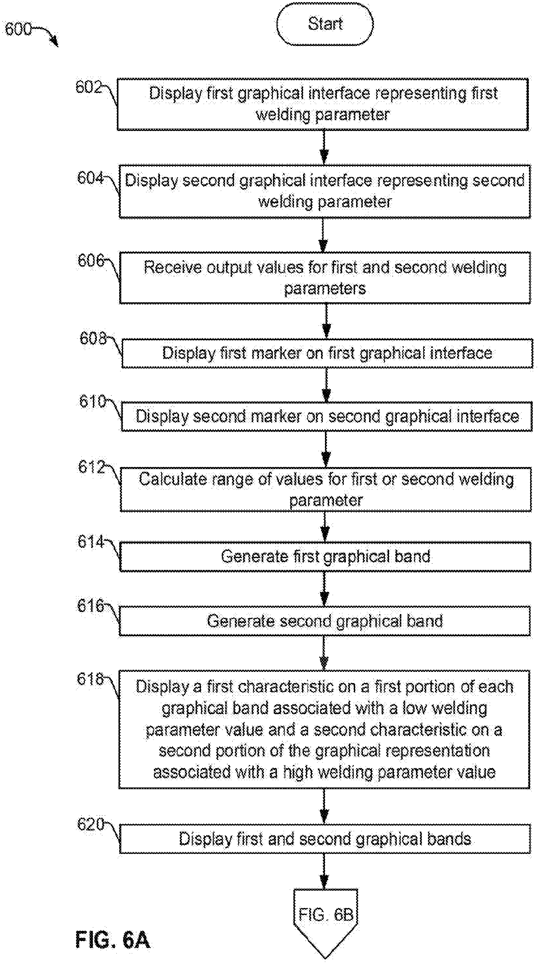

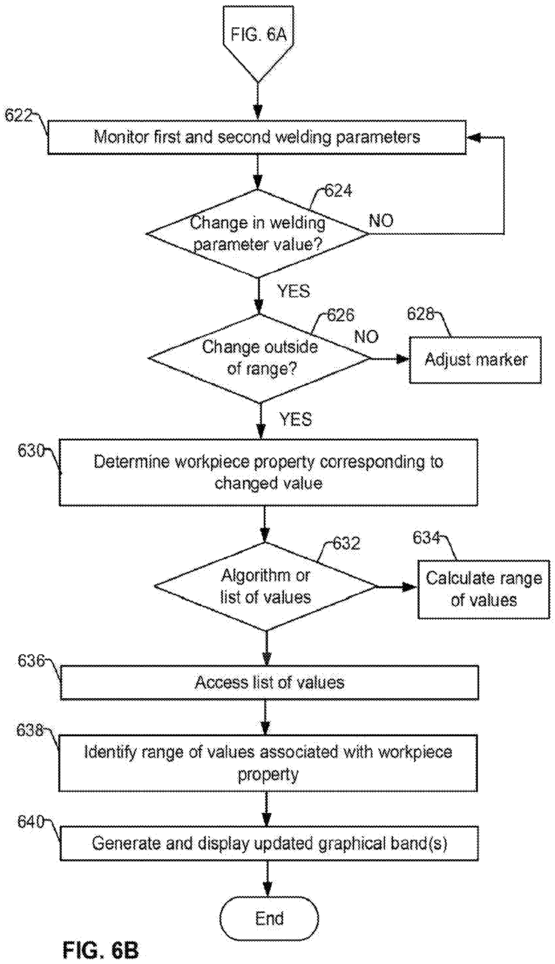

FIG. 6 is a flowchart representative of example machine readable instructions 600 which may be executed by the example welding system 100 of FIG. 1A, the example welding system 152 of FIG. 1B, and/or the example welding system 154 of FIG. 1C, to configure one or more graphical user interfaces during a welding process. The example instructions 600 may be stored in the storage device(s) 123 and/or the memory 124 and executed by the processor(s) 120 of the control circuitry 112. The example instructions 600 are described below with reference to the example graphical user interfaces 200, 400 and 500 of FIGS. 2 through 5.

In block 602, a first graphical interface is displayed representing a first welding parameter (e.g., voltage). In block 604, a second graphical interface is displayed representing a second welding parameter (e.g., wire feed speed), each graphical interface being controlled by a controller. In block 606, the controller receives data corresponding to output values for each of the first and second welding parameters, respectively. For example, the output values can be measured by one or more sensors, calculated by the controller, and/or reflect a selected value (e.g., from selectors 232, 234).

In block 608, a first marker is displayed on the first graphical interface representing the output value associated with the first welding parameter. In block 610, a second marker is displayed on the second graphical interface representing the output value associated with the first welding parameter.

In block 612, the controller is configured to calculate a range of values for each of the first and second welding parameter based on the output value associated with the second welding parameter and/or associated with the weld program and/or one or more of the welding process parameter, the wire type parameter, the wire size parameter, the gas type parameter, or a corresponding workpiece property (e.g., material thickness, material type, welding process, etc.). Based on the calculated range of values, a first graphical band is generated to represent the range of values for the first welding parameter in block 614. A second graphical band is generated to represent the range of values for the second welding parameter in block 616.

In block 618, the controller displays a first characteristic on a first portion of each graphical band associated with a low welding parameter value and displays a second characteristic on a second portion of the graphical representation associated with a high welding parameter value. In block 620, the first and second graphical bands are displayed on the first and second graphical interfaces, respectively.

In block 622, the controller monitors the first and second welding parameters (via sensors, user inputs, etc.), and determines in block 624 if there is a change to one or more of the first and second welding parameters.

If there is a change in value to the second welding parameter (e.g., the wire feed speed), the controller compares the change to the range of values in block 626. If the change in value is within the range of values, the marker position is adjusted accordingly in block 628, but the range of values (and the relevant graphical band) remains unchanged.

If the change in value is beyond the range of values (and thus the graphical band), the method determines the workpiece property that corresponds to the output value in block 630. In some examples, the method additionally or alternatively determines one or more of the welding process parameter, the wire type parameter, the wire size parameter, or the gas type parameter. In some examples, the controller determines whether the range of values is determined via an algorithm (e.g., based on programed values) or via a list of values in block 632. If an algorithm is employed, the method proceeds to block 634 to calculate a new range of values for one or both of the first and second welding parameters based on the workpiece property.

If a list of values is referenced, the method proceeds to block 636 to access a list of workpiece properties and/or welding process parameters, each property corresponding to a range of values for the first or the second welding parameter. In block 638, a range of values associated with the workpiece property value is identified. Based on the updated second range of values, in block 640 an updated third graphical band is generated and displayed for one or both of the first and second welding parameters.

The present devices may be realized in hardware, software, or a combination of hardware and software. The present systems may be realized in a centralized fashion in at least one computing system, processors, and/or other logic circuits, or in a distributed fashion where different elements are spread across several interconnected computing systems, processors, and/or other logic circuits. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

The control circuitry may identify welding conditions of a given weld and automatically find the optimum value of rate of current rise for the welding conditions. An example control circuit implementation may be an Atmel Mega16 microcontroller, a STM32F407 microcontroller, a field programmable logic circuit and/or any other control or logic circuit capable of executing instructions that executes weld control software. The control circuit could also be implemented in analog circuits and/or a combination of digital and analog circuitry. Examples are described herein with reference to an engine-driven stick welder, but may be used or modified for use in any type of high frequency switching power source.

## Claims

1. A combination of a graphical user interface (114; 156; 200; 400; 500) and a controller (112; 134; 158), the graphical user interface (114; 156; 200; 400; 500) comprising:
a first graphical interface (202; 402; 502) representing a first welding parameter; and
a second graphical interface (204; 504) representing a second welding parameter, each graphical interface being controlled by the controller;
the combination being **characterised in that** the controller (112; 134; 158) is configured to:
receive data corresponding to output values for each of the first and second welding parameters, respectively;
display a first marker (206; 406; 506) on the first graphical interface representing the output value associated with the first welding parameter;
display a second marker (218; 508) on the second graphical interface representing the output value associated with the second welding parameter;
determine a range of values for each of the first and second welding parameter based on the output value associated with the second welding parameter and one or more corresponding welding process parameters;
generate a first graphical band (210; 410; 510) representing the range of values for the first welding parameter;
generate a second graphical band (224, 225; 524) representing the range of values for the second welding parameter;
display the first and second graphical bands on the first and second graphical interfaces, respectively
adjust a position of the first graphical band (210; 410; 510) on the first graphical interface (202; 402; 502) based on a change in the output value associated with the second welding parameter.

2. The combination of claim 1, wherein the generated range of values for the second welding parameter are a first range of values, the controller (112; 134; 158) further configured to:
determine a change in the output value associated with the second welding parameter from a first value corresponding to a first workpiece property value to a second value corresponding to a second workpiece property value.

3. The combination of claim 2, wherein the first workpiece property value corresponds to the first range of values and the second workpiece property value corresponds to a second range of values, the controller (112; 134; 158) further configured to:
generate a third graphical band (525) corresponding to the second range of values; and
display the third graphical band on the second graphical interface (504), and optionally
wherein the second graphical band (524) representing the first range of values overlaps with the third graphical band (525) representing the second range of values.

4. The combination of claim 1, wherein the controller (112; 134; 158) is further configured to access a list of workpiece properties, each property corresponding to a range of values for the first or the second welding parameter.

5. The combination of claim 1, wherein the controller (112; 134; 158) is further configured to:
receive an input corresponding to a change in value of the first welding parameter;
display the first marker (206; 406; 506) at the changed value on the first graphical interface (202; 402; 502) independently of the first graphical band (210; 410; 510).

6. The combination of claim 1, wherein the controller (112; 134; 158) is further configured to:
display a first characteristic on a first portion of each graphical band (210, 224; 410; 510, 525, 524) associated with a low welding parameter value; and
display a second characteristic on a second portion of the graphical representation associated with a high welding parameter value.

7. The combination of claim 1, wherein the first or second characteristic comprises one of a color, an intensity, a shape, a size, or a pattern, and optionally wherein the first characteristic is a first color and the second characteristic is a second color, the controller configured to control the respective graphical interface to display a color gradient from the first color to the second color.

8. The combination of claim 1, wherein portions of each graphical interface displays a graphical operating range (208, 222; 408, 222; 508, 509, 522, 523) corresponding to the operating range of the respective welding parameter, wherein portions of the graphical operating range outside the respective graphical band (210, 224, 225; 410; 510, 524) is displayed with a third characteristic.

9. The combination of claim 1, wherein the controller (112; 134; 158) is further configured to dynamically calculate the range of values based on a change in a property of a workpiece.

10. The combination of claim 9, wherein the property of the workpiece comprises one or more of material thickness or material type.

11. A welding-type system (100; 152; 154) comprising:
a wire feeder (104)); and
being **characterised by**:
a welding-type power supply (102) comprising:
a combination of a graphical user interface (114; 156; 200; 400; 500) and a controller (112; 134; 158) of any one of claim 1 to 10.

12. The system (100; 152; 154) of claim 11, wherein each graphical interface (202 204; 402; 502, 504) further comprises a numerical value of the respective welding parameter.

13. The system (100; 152; 154) of claim 11, wherein the first welding parameter is voltage, and the second welding parameter is wire feed speed.

14. The system (100; 152; 154) of claim 11, wherein one or more visual indicators associated with the first (210; 410; 510) or second (224, 225; 524) graphical band is changed in response to a change in the first or the second welding parameter, and optionally wherein the one or more visual indicators is one of a color, a brightness, a shape, a size, or a pattern.

15. The system (100; 152; 154) of claim 11, wherein limits of the operating ranges the first and second graphical interfaces (202, 204; 402; 502, 504) correspond to operating parameters of the welding-type system, the controller (112; 134; 158) further configured to display the first and second graphical bands (210, 224, 225; 410; 510, 524) within the respective operating range based on the calculated range of values.

## Patentansprüche

1. Kombination aus einer grafischen Benutzeroberfläche (114; 156; 200; 400; 500) und einer Steuerung (112; 134; 158), die grafische Benutzeroberfläche (114; 156; 200; 400; 500) aufweisend:
eine erste grafische Oberfläche (202; 402; 502), die einen ersten Schweißparameter darstellt; und
eine zweite grafische Oberfläche (204; 504), die einen zweiten Schweißparameter darstellt, wobei beide grafischen Oberflächen durch die Steuerung gesteuert werden;
wobei die Kombination **dadurch gekennzeichnet ist, dass** die Steuerung (112, 134, 158) konfiguriert ist zum:
Empfangen von Daten, die Ausgangswerten für den ersten bzw. den zweiten Schweißparameter entsprechen;
Anzeigen einer ersten Markierung (206; 406; 506) auf der ersten grafischen Oberfläche, die den Ausgangswert darstellt, der mit dem ersten Schweißparameter assoziiert ist;
Anzeigen einer zweiten Markierung (218; 508) auf der zweiten grafischen Oberfläche, die den Ausgangswert darstellt, der mit dem zweiten Schweißparameter assoziiert ist;
Bestimmen eines Wertebereichs sowohl für den ersten als auch den zweiten Schweißparameter basierend auf dem Ausgangswert, der mit dem zweiten Schweißparameter assoziiert ist, und einem oder mehreren entsprechenden Schweißprozessparametern;
Erzeugen eines ersten grafischen Bands (210, 410; 510), das den Wertebereich für den ersten Schweißparameter darstellt;
Erzeugen eines zweiten grafischen Bands (224, 225; 524), das den Wertebereich für den zweiten Schweißparameter darstellt;
Anzeigen des ersten und des zweiten grafischen Bands auf der ersten bzw. der zweiten grafischen Oberfläche
Anpassen einer Position des ersten grafischen Bands (210; 410; 510) auf der ersten grafischen Oberfläche (202; 402; 502) basierend auf einer Änderung des Ausgangswerts, der mit dem zweiten Schweißparameter assoziiert ist.

2. Kombination nach Anspruch 1, wobei der erzeugte Wertebereich für den zweiten Schweißparameter ein erster Wertebereich ist, wobei die Steuerung (112; 134; 158) ferner konfiguriert ist zum:
Bestimmen einer Änderung des Ausgangswerts, der mit dem zweiten Schweißparameter assoziiert ist, von einem ersten Wert, der einem ersten Werkstückeigenschaftswert entspricht, zu einem zweiten Wert, der einem zweiten Werkstückeigenschaftswert entspricht.

3. Kombination nach Anspruch 2, wobei der erste Werkstückeigenschaftswert dem ersten Wertebereich entspricht und der zweite Werkstückeigenschaftswert einem zweiten Wertebereich entspricht, wobei die Steuerung (112; 134; 158) ferner konfiguriert ist zum:
Erzeugen eines dritten grafischen Bands (525), das dem zweiten Wertebereich entspricht; und
Anzeigen des dritten grafischen Bands auf der zweiten grafischen Oberfläche (504), und wobei optional das zweite grafische Band (524), das den ersten Wertebereich darstellt, mit dem dritten grafischen Band (525), das den zweiten Wertebereich darstellt, überlappt.

4. Kombination nach Anspruch 1, wobei die Steuerung (112; 134; 158) ferner so konfiguriert ist, dass sie auf eine Liste von Werkstückeigenschaften zugreift, wobei jede Eigenschaft einem Wertebereich für den ersten oder den zweiten Schweißparameter entspricht.

5. Kombination nach Anspruch 1, wobei die Steuerung (112; 134; 158) ferner konfiguriert ist zum:
Empfangen einer Eingabe, die einer Änderung des Werts des ersten Schweißparameters entspricht;
Anzeigen der ersten Markierung (206; 406; 506) an dem geänderten Wert auf der ersten grafischen Oberfläche (202; 402; 502) unabhängig von dem ersten grafischen Band (210; 410; 510).

6. Kombination nach Anspruch 1, wobei die Steuerung (112; 134; 158) ferner konfiguriert ist zum:
Anzeigen einer ersten Eigenschaft auf einem ersten Abschnitt jedes grafischen Bands (210, 224; 410; 510, 525, 524), der mit einem niedrigen Schweißparameterwert assoziiert ist; und
Anzeigen einer zweiten Eigenschaft auf einem zweiten Abschnitt der grafischen Darstellung, der mit einem hohen Schweißparameterwert verbunden ist.

7. Kombination nach Anspruch 1, wobei die erste oder zweite Eigenschaft eines aus einer Farbe, einer Intensität, einer Form, einer Größe oder einem Muster aufweist; und wobei optional die erste Eigenschaft eine erste Farbe und die zweite Eigenschaft eine zweite Farbe ist, wobei die Steuerung so konfiguriert ist, dass sie die entsprechende grafische Oberfläche so steuert, dass sie einen Farbverlauf von der ersten Farbe zu der zweiten Farbe anzeigt.

8. Kombination nach Anspruch 1, wobei Abschnitte jeder grafischen Oberfläche einen grafischen Betriebsbereich (208, 222; 408, 222; 508, 509, 522, 523) anzeigen, der dem Betriebsbereich des jeweiligen Schweißparameters entspricht, wobei Abschnitte des grafischen Betriebsbereichs außerhalb des jeweiligen grafischen Bands (210, 224, 225; 410; 510, 524) mit einer dritten Eigenschaft angezeigt werden.

9. Kombination nach Anspruch 1, wobei die Steuerung (112; 134; 158) ferner so konfiguriert ist, dass sie den Wertebereich basierend auf einer Änderung einer Eigenschaft eines Werkstücks dynamisch berechnet.

10. Kombination nach Anspruch 9, wobei die Eigenschaft des Werkstücks eines oder mehrere aus der Materialdicke und dem Materialtyp aufweist.

11. Schweißsystem (100; 152; 154), aufweisend:
einen Drahtvorschub (104); und
**gekennzeichnet durch**:
eine Schweißstromversorgung (102), aufweisend:
eine Kombination aus einer grafischen Benutzeroberfläche (114; 156; 200; 400; 500) und einer Steuerung (112; 134; 158) nach einem der Ansprüche 1 bis 10.

12. System (100; 152; 154) nach Anspruch 11, wobei jede grafische Oberfläche (202 204; 402; 502, 504) ferner einen numerischen Wert des jeweiligen Schweißparameters aufweist.

13. System (100; 152; 154) nach Anspruch 11, wobei der erste Schweißparameter die Spannung ist und der zweite Schweißparameter die Drahtvorschubgeschwindigkeit ist.

14. System (100; 152; 154) nach Anspruch 11, wobei ein oder mehrere visuelle Indikatoren, die mit dem ersten (210; 410; 510) oder dem zweiten (224, 225; 524) grafischen Band assoziiert sind, in Reaktion auf eine Änderung des ersten oder des zweiten Schweißparameters geändert werden, und wobei optional der eine oder die mehreren visuellen Indikatoren eines aus einer Farbe, einer Helligkeit, einer Form, einer Größe oder eines Musters sind.

15. System (100; 152; 154) nach Anspruch 11, wobei die Grenzen der Betriebsbereiche der ersten und zweiten grafischen Oberfläche (202, 204; 402; 502, 504) Betriebsparametern des Schweißsystems entsprechen, wobei die Steuerung (112; 134; 158) ferner so konfiguriert ist, dass sie das erste und zweite grafische Band (210, 224, 225; 410; 510, 524) basierend auf dem berechneten Wertebereich innerhalb des jeweiligen Betriebsbereichs anzeigen.

## Revendications

1. Combinaison d'une interface utilisateur graphique (114 ; 156 ; 200 ; 400 ; 500) et d'un dispositif de commande (112 ; 134 ; 158), l'interface utilisateur graphique (114 ; 156 ; 200 ; 400 ; 500) comprenant :
une première interface graphique (202 ; 402 ; 502) représentant un premier paramètre de soudage ; et
une deuxième interface graphique (204 ; 504) représentant un deuxième paramètre de soudage, chaque interface graphique étant commandée par le dispositif de commande ;
la combinaison étant **caractérisée en ce que** le dispositif de commande (112 ; 134 ; 158) est configuré pour :
recevoir des données correspondant à des valeurs de sortie pour chacun parmi les premier et deuxième paramètres de soudage, respectivement ;
afficher un premier marqueur (206 ; 406 ; 506) sur la première interface graphique représentant la valeur de sortie associée avec le premier paramètre de soudage ;
afficher un deuxième marqueur (218 ; 508) sur la deuxième interface graphique représentant la valeur de sortie associée avec le deuxième paramètre de soudage ;
déterminer une plage de valeurs pour chacun parmi les premier et deuxième paramètres de soudage sur base de la valeur de sortie associée avec le deuxième paramètre de soudage et d'un ou plusieurs paramètres de processus de soudage correspondants ;
générer une première bande graphique (210 ; 410 ; 510) représentant la plage de valeurs pour le premier paramètre de soudage ;
générer une deuxième bande graphique (224, 225 ; 524) représentant la plage de valeurs pour le deuxième paramètre de soudage ;
afficher les première et deuxième bandes graphiques sur les première et deuxième interfaces graphiques, respectivement
ajuster une position de la première bande graphique (210 ; 410 ; 510) sur la première interface graphique (202 ; 402 ; 502) sur base d'un changement dans la valeur de sortie associée avec le deuxième paramètre de soudage.

2. Combinaison selon la revendication 1, dans laquelle la plage de valeurs générée pour le deuxième paramètre de soudage est une première plage de valeurs, le dispositif de commande (112 ; 134 ; 158) étant en outre configuré pour :
déterminer un changement dans la valeur de sortie associée avec le deuxième paramètre de soudage d'une première valeur correspondant à une première valeur de propriété de pièce à usiner à une deuxième valeur correspondant à une deuxième valeur de propriété de pièce à usiner.

3. Combinaison selon la revendication 2, dans laquelle la première valeur de propriété de pièce à usiner correspond à la première plage de valeurs et la deuxième valeur de propriété de pièce à usiner correspond à une deuxième plage de valeurs, le dispositif de commande (112 ; 134 ; 158) étant en outre configuré pour :
générer une troisième bande graphique (525) correspondant à la deuxième plage de valeurs ; et afficher la troisième bande graphique sur la deuxième interface graphique (504), et facultativement dans laquelle la deuxième bande graphique (524) représentant la première plage de valeurs chevauche la troisième bande graphique (525) représentant la deuxième plage de valeurs.

4. Combinaison selon la revendication 1, dans laquelle le dispositif de commande (112 ; 134 ; 158) est en outre configuré pour accéder à une liste de propriétés de la pièce à usiner, chaque propriété correspondant à une plage de valeurs pour le premier ou le deuxième paramètre de soudage.

5. Combinaison selon la revendication 1, dans laquelle le dispositif de commande (112 ; 134 ; 158) est en outre configuré pour :
recevoir une entrée correspondant à un changement de valeur du premier paramètre de soudage ;
afficher le premier marqueur (206 ; 406 ; 506) sur la valeur changée sur la première interface graphique (202 ; 402 ; 502) indépendamment de la première bande graphique (210 ; 410 ; 510).

6. Combinaison selon la revendication 1, dans laquelle le dispositif de commande (112 ; 134 ; 158) est en outre configuré pour :
afficher une première caractéristique sur une première partie de chaque bande graphique (210, 224 ; 410 ; 510, 525, 524) associée avec une faible valeur de paramètre de soudage ; et
afficher une deuxième caractéristique sur une deuxième partie de la représentation graphique associée avec une valeur élevée de paramètre de soudage.

7. Combinaison selon la revendication 1, dans laquelle la première ou la deuxième caractéristique comprend un parmi une couleur, une intensité, une forme, une taille, ou un motif, et facultativement dans laquelle la première caractéristique est une première couleur et la deuxième caractéristique est une deuxième couleur, le dispositif de commande étant configuré pour commander l'interface graphique respective pour afficher un gradient de couleur de la première couleur à la deuxième couleur.

8. Combinaison selon la revendication 1, dans laquelle des parties de chaque interface graphique affichent une plage de fonctionnement graphique (208, 222 ; 408, 222 ; 508, 509, 522, 523) correspondant à la plage de fonctionnement du paramètre de soudage respectif, dans laquelle des parties de la plage de fonctionnement graphique en dehors de la bande graphique respective (210, 224, 225 ; 410 ; 510, 524) sont affichées avec une troisième caractéristique.

9. Combinaison selon la revendication 1, dans laquelle le dispositif de commande (112 ; 134 ; 158) est en outre configuré pour calculer dynamiquement la plage de valeurs sur base d'un changement dans une propriété d'une pièce à usiner.

10. Combinaison selon la revendication 9, dans laquelle la propriété de la pièce à usiner comprend une ou plusieurs épaisseurs de matériau ou types de matériau.

11. Système de type soudage (100 ; 152 ; 154) comprenant :
un dispositif d'alimentation en fil (104) ; et
étant **caractérisé par** :
une alimentation électrique de type soudage (102), comprenant :
une combinaison d'une interface utilisateur graphique (114 ; 156 ; 200 ; 400 ; 500) et d'un dispositif de commande (112 ; 134 ; 158) selon l'une quelconque des revendications 1 à 10.

12. Système (100 ; 152 ; 154) selon la revendication 11, dans lequel chaque interface graphique (202 204 ; 402 ; 502, 504) comprend en outre une valeur numérique du paramètre de soudage respectif.

13. Système (100 ; 152 ; 154) selon la revendication 11, dans lequel le premier paramètre de soudage est la tension, et le deuxième paramètre de soudage est la vitesse d'alimentation en fil.

14. Système (100 ; 152 ; 154) selon la revendication 11, dans lequel un ou plusieurs indicateurs visuels associés avec la première (210 ; 410 ; 510) ou la deuxième (224, 225 ; 524) bande graphique sont changés en réponse à un changement dans le premier ou le deuxième paramètre de soudage, et facultativement dans lequel le ou les indicateurs visuels sont l'un parmi une couleur, une luminosité, une forme, une taille ou un motif.

15. Système (100 ; 152 ; 154) selon la revendication 11, dans lequel les limites des plages de fonctionnement des première et deuxième interfaces graphiques (202, 204 ; 402 ; 502, 504) correspondent aux paramètres de fonctionnement du système de type soudage, le dispositif de commande (112 ; 134 ; 158) étant en outre configuré pour afficher les première et deuxième bandes graphiques (210, 224, 225 ; 410 ; 510, 524) à l'intérieur de la plage de fonctionnement respective sur base des plage de valeurs calculées.
